# EUROPÄISCHE PATENTANMELDUNG

(11) **EP 2 208 973 A1**
(43) Veröffentlichungstag der Anmeldung: **21.07.2010**
(21) Anmeldenummer: 09150661.8
(22) Anmeldetag: 15.01.2009
(51) Int. Cl.: G01G 21/22, B65B 7/12

(54) **Wägegutträger für eine Waage**

(71) Anmelder: Mettler-Toledo AG, 8606 Greifensee (CH)
(72) Erfinder: Lüchinger, Paul, 8610, Uster (CH)

(57) **Zusammenfassung**

Wägegutträger für eine Wägezelle, welcher Wägegutträger mit einem Lastaufnehmer der Wägezelle verbindbar ist, wobei der Wägegutträger mindestens eine Auflagestelle und mindestens zwei Führungsstellen zur Aufnahme eines Beutels beinhaltet, welcher Beutel in unbefülltem Zustand flach ausgebildet ist und zwei Seitenkanten aufweist, sowie mit einer Einfüllöffnung versehen ist und aus einem eigensteifen Folienmaterial gefertigt ist, die mindestens zwei Führungsstellen bezogen auf die Lastrichtung oberhalb der mindestens einen Auflagestelle angeordnet sind, wobei bei einem in den Wägegutträger aufgenommenen Beutel die Auflagestelle der Abstützung des Beutels in Lastrichtung dient und die Führungsstellen zur Führung und Ausrichtung des Beutels in Lastrichtung dienen, jede der beiden Seitenkanten eines aufgenommenen Beutels durch mindestens eine Führungsstelle geführt ist und zur Erhöhung der Knicksteifigkeit des Beutels in seiner Längsrichtung und zum Öffnen der Einfüllöffnung die Distanz zwischen den Führungsstellen kleiner ist als der Abstand der Seitenkanten eines flachgedrückten Beutels.

## Beschreibung

Die Erfindung betrifft einen Wägegutträger für eine Wägezelle, ein Verfahren zur Herstellung des Wägegutträgers, sowie die Verwendung von mindestens einem Wägegutträger in einer Waage, in einer, eine Wägezelle enthaltenden Dosiervorrichtung, in einem Wägelift für eine automatisierte Waage oder in einer, eine Wägezelle enthaltenden, automatisierten Vorrichtung zur Herstellung von Substanzformulierungen oder in einem automatisierten Substanzmanagementsystem.

Prinzipiell ist eine Vielzahl von Wägegutträgern für unterschiedliche Waagentypen bekannt, deren Formen häufig an das jeweilige Einsatzgebiet, das Wägegut und/oder die verwendete Waage angepasst sind. Als Wägegutträger wird hier sowohl eine mit einem Kraftmesssystem der Waage in Kraftkontakt stehende Wägeplattform oder Waagschale, als auch eine mit einer Beschickungsvorrichtung verbundene Aufnahmevorrichtung zum Transport des Wägeguts zur oder von der Wägeplattform verstanden. Auf derartigen Wägegutträgern sind Wägegüter während des Wiegens oder des Transfers von oder zur Wägeplattform angeordnet. Das Zusammenwirken eines Wägegutträgers und einer Transferplattform wird beispielsweise in einem Wägelift für eine automatisierbare Waage oder in einem sogenannten Autosampler genutzt.

Die Anforderungen an die Ausgestaltung der Waage und auch der Wägegutträger steigen ständig, insbesondere in Einsatzgebieten mit strengen gesetzlichen Vorlagen, wie zum Beispiel in der Medizin, der Biochemie oder der Pharmazie. Zu diesen Anforderungen zählt beispielsweise das leichte Reinigen der mit einem Wägegut in Kontakt kommenden Teile der Waage, insbesondere des Wägegutträgers. Zur Reinigung wird der Wägegutträger in der Regel aus der Waage ausgebaut, separat gereinigt, getrocknet und wieder eingebaut. Dabei soll der Wägegutträger nicht nur physikalisch und/oder chemisch von Rückständen befreit und gereinigt werden, sondern gegebenenfalls auch sterilisiert werden, so dass dieser zumindest den gesetzlich geforderten Hygieneanforderungen genügt. Noch besser ist jedoch, wenn der Wägegutträger derart ausgestaltet ist, dass eine Reinigung erst gar nicht notwendig ist oder nur sehr selten durchgeführt werden muss.

Solange stabile Einwaagegefässe, in welche das Wägegut eingebracht werden soll, auf den Wägegutträger gestellt werden, muss der Wägegutträger lediglich eine ebene Auflagestelle aufweisen, die dem stabilen Einwaagegefäss einen sicheren Halt verleiht.

Im Stand der Technik sind Wägegutträger bekannt, in welche Einwaagegefässe mit sehr dünnen, flexiblen Wänden, beispielsweise Beutel eingesetzt werden können. Dies hat verschiedene Vorteile. Erstens weist ein Beutel im Vergleich zu einem stabilen Einwaagegefäss ein sehr geringes Taragewicht auf, was beim Verwiegen auf einer hochauflösenden Waage zu einem grösseren, ausnutzbaren Wägebereich führt. Zweitens können sowohl die leeren Beutel wie auch die befüllten Beutel sehr raumsparend eingelagert werden.

Ein Wägegutträger zur Aufnahme eines Beutels wird in der JP 2934629 B1 offenbart. Der Wägegutträger ist auf den Lastaufnehmer einer Waage aufsetzbar. Der Beutelboden kann auf einer Auflagestelle aufliegen. Damit der Beutel im Wesentlichen in senkrechter Stellung und mit gegen oben gerichteter, geöffneter Einfüllöffnung gehalten werden kann, weist der Wägegutträger einen Ständer mit einer Halteklammer auf. Der Saum der Einfüllöffnung wird in dieser Halteklammer eingespannt. Die Halteklammer besteht aus mehreren, miteinander beweglich verbundenen Teilen, insbesondere aus einem schwenkbaren Halter, einem Verbindungsbolzen, einem Öffnungshalter und einem elastischen Körper. Die Halteklammer greift ferner in den Beutel hinein, damit die Einfüllöffnung desselben offen gehalten werden kann. Wenn nun pulverförmige Substanzen in den Beutel abgefüllt werden, kann die Halteklammer verschmutzt werden. Zudem weist dieser Wägegutträger aufgrund seiner Vielzahl von Einzelteilen und Befestigungsmittel ein erhebliches Eigengewicht auf, so dass er für hochauflösende Waagen mit kleinem Wägebereich ungeeignet ist. Ferner ist die Reinigung und Reinigungskontrolle desselben aufgrund von Spalten, in welchen sich Substanzen ansammeln können, aufwändig und teuer.

Es ist daher die Aufgabe der vorliegenden Erfindung einen Wägegutträger für Beutel zu schaffen, welcher ein geringes Eigengewicht aufweist, welcher kaum gereinigt werden muss, dem Beutel sicheren Halt verleiht und einfach ausgetauscht werden kann.

Diese Aufgabe wird durch einen Wägegutträger mit den kennzeichnenden Merkmalen des Anspruchs 1 gelöst. Weitere bevorzugte Ausführungsformen der Erfindung sind Bestandteil der abhängigen Ansprüche.

Der vorliegende Wägegutträger ist mit einem Lastaufnehmer einer beliebigen Wägezelle verbindbar. Erfindungsgemäss beinhaltet der Wägegutträger mindestens eine Auflagestelle und mindestens zwei Führungsstellen zur Aufnahme eines Beutels. Der Beutel ist in unbefülltem Zustand flach ausgebildet, weist zwei Seitenkanten auf und ist mit einer Einfüllöffnung versehen. Zudem ist der Beutel aus einem eigensteifen Folienmaterial gefertigt. Eigensteif bedeutet, dass der Beutel aus derart steifem Folienmaterial gefertigt ist, dass er sich in unbefülltem, flachem Zustand aufgrund seines Eigengewichtes gerade noch auf den Abstützstellen halten kann, wenn er, in seiner flächigen Ausdehnung horizontal ausgerichtet, an zwei gegenüberliegenden Seitenkanten auf diesen abgestützt aufliegt. Damit wird klar, dass die Eigensteifigkeit eines Beutels nicht nur von der Folienstärke und vom Folienmaterial abhängig ist, sondern auch von der Länge und Breite des Beutels abhängt. Gängige Folienmaterialien für solche Beutel sind Folien grösserer Stärke etwa zwischen 0,01 mm bis 0,25mm, mehrschichtige Kunststofffolien, Laminate aus Metall- und Kunststofffolien, mit Kunststofffolien oder Metallfolien kaschierte Papiere und Gewebe und dergleichen mehr. Üblicherweise werden solche Beutel aus zwei Lagen viereckig zugeschnittenen Folienmaterials hergestellt, wobei die beiden Lagen an drei ihrer vier Seitenkanten miteinander verklebt oder verschweisst sind und die vierte, unverschweisste Seitenkante die Einfüllöffnung bildet. Es sind weitere Ausführungsformen von eigensteifen Beuteln bekannt, welche ferner einen, aus einem weiteren Stück Folienmaterial gebildeten Boden aufweisen.

Der Wägegutträger beinhaltet mindestens zwei Führungsstellen, welche bezogen auf die Lastrichtung oberhalb der mindestens einen Auflagestelle angeordnet sind. Bei einem in den Wägegutträger aufgenommenem Beutel dient die Auflagestelle der Abstützung des Beutels in Lastrichtung und die Führungsstellen dienen zur Führung und Ausrichtung des Beutels in Lastrichtung. Mit Lastrichtung ist die Richtung der Schwerkraft gemeint. Jede der beiden Seitenkanten eines aufgenommenen Beutels ist durch mindestens eine Führungsstelle geführt. Damit die Einfüllöffnung eines im Wägegutträger aufgenommenen Beutels offen gehalten werden kann und zudem die Knicksteifigkeit des Beutels in seiner Längsrichtung erhöht wird, ist der Abstand zwischen den mindestens zwei Führungsstellen kleiner als die Distanz zwischen den zwei Seitenkanten eines flachgedrückten Beutels. Somit entspricht die Distanz zwischen den zwei Seitenkanten der Breite des Beutels. Durch diese Massnahmen kann nach der Aufnahme eines Beutels in den Wägegutträger ohne Probleme in den Beutel eindosiert werden, ohne dass der Beutel unter der Last des Dosiergutes einknickt. Insbesondere ragt kein Teil des Wägegutträgers durch die Einfüllöffnung in den Beutel hinein, wodurch sowohl eine Verschmutzung des Wägegutträgers als auch eine Kontamination des Dosiergutes durch den Kontakt mit einem hineinragenden Teil vermieden werden kann.

Vorzugsweise sind die mindestens zwei Führungsstellen in derselben, orthogonal zur Lastrichtung sich erstreckenden Ebene angeordnet. Dadurch kann der Beutel viel einfacher in den Wägegutträger eingelegt werden, als wenn die beiden Führungsstellen in unterschiedlichen Ebenen angeordnet sind. Zudem ist es vorteilhaft, dass die Führungsstellen möglichst weit von der Auflagestelle entfernt, zumindest aber oberhalb des Beutel- Massenschwerpunktes am Beutel angreifen, so dass ein befüllter Beutel nicht aus dem Wägegutträger kippen kann.

Damit der Beutel auf einfache Weise in den Wägegutträger eingesetzt werden kann, weist jede Führungsstelle vorteilhafterweise eine in Lastrichtung sich erstreckende Aufnahmenut zur Aufnahme einer Seitenkante des Beutels auf. Die beiden Seitenkanten eines einzulegenden Beutels müssen im Bereich der Einfüllöffnung lediglich gegeneinander gedrückt werden, wodurch sich die Einfüllöffnung öffnet und der Beutel zwischen die Führungsstellen gebracht werden kann. Sobald die Seitenkanten entlastet werden, federt das eigensteife Folienmaterial zurück und die Seitenkanten fügen sich in die Aufnahmenuten ein.

Dies gelingt hervorragend, wenn die offenen Seiten der Aufnahmenut mindestens zweier Führungsstellen gegeneinander gerichtet sind.

Damit sich die Seitenkanten des Beutels noch besser in die Aufnahmenuten einfügen, kann die offene Seite der Aufnahmenut eine Einlaufkontur aufweisen.

Eine Ausführung des Wägegutträgers sieht vor, dass dieser oder zumindest dessen Halterung in eine Mehrfachaufnahme für mehrere Wägegutträger einsetzbar ist. Solche Mehrfachaufnahmen können Racks zur temporären Aufbewahrung der Wägegutträger, beispielsweise in Substanzmanagementsystemen aber auch Mehrfachaufnahmen von Beschickungsvorrichtungen aller Art, beispielsweise von sogenannten Autosamplern sein. Bei seriellen Mehrfacheinwägungen oder gravimetrischen Dosierungen mittels einer mit einem Autosampler automatisierten Waage werden die Einwaagegefässe einzeln auf die Waagschale gesetzt, mit der Auslassöffnung der Dosiervorrichtung ausgerichtet und nach erfolgtem Dosiervorgang wieder von der Waagschale entfernt. Da der Beutel nicht ungestützt mit dem Lastaufnehmer verbunden werden kann, muss zumindest auch die Halterung mitgewogen werden. Je nach Ausgestaltung des Autosamplers und dem Wägegutträger können mehrere Grundauslegungen realisiert werden. Bei der ersten Grundauslegung sind die Wägegutträger in der Mehrfachaufnahme des Autosamplers angeordnet und können einzeln nacheinander mit dem Lastaufnehmer verbunden werden. Bei der zweiten Grundauslegung sind nur die Halterungen in der Mehrfachaufnahme des Autosamplers angeordnet und können einzeln nacheinander mit der am Lastaufnehmer angeordneten Trägerstruktur verbunden werden. Bei der dritten Grundauslegung wird die gesamte Mehrfachauflage als Trägerstruktur dienend inklusive alle Halterungen aufgelegt und gewogen, wobei zur Ermittlung der Einzelmassen der verschiedenen eingewogenen Wägegüter nach jeder neuen Einwägung eine Differenzrechnung durchgeführt werden muss

Da diese Beschickungsvorrichtungen meistens durch eine Steuereinheit gesteuert werden, ist es äusserst wichtig, dass die genaue Position des einzelnen Wägegutträgers oder der Halterung zur Mehrfachaufnahme bekannt ist. Am einfachsten kann eine derartige Ausrichtung mit mindestens einem, zwischen der Halterung und der Mehrfachaufnahme angeordneten mechanischen Ausrichtungsmittel erfolgen, zum Beispiel mit Anschlägen, Bohrungen, Schlitzen, Zentrierbolzen, Anfräsungen, Nuten und Vorsprüngen.

Eine weitere Ausführung des Wägegutträgers sieht vor, dass dieser oder zumindest dessen Halterung einen Haltegriff und/oder einen Greiferanschluss aufweist. Sofern der Wägegutträger in einer Waage mit einem Windschutz verwendet wird, vereinfacht der Haltegriff das manuelle Auflegen beziehungsweise Entfernen des Wägegutträgers vom Lastaufnehmer wesentlich. Dasselbe gilt sinngemäss auch für die Halterung. Der Greiferanschluss dient der Kopplung des Wägegutträgers oder der Halterung mit einem Greifer einer Beschickungsvorrichtung, beispielsweise einem Industrieroboter oder einem Wägelift.

Ferner kann der Wägegutträger auch dahingehend ausgebildet sein, dass die Höhe zwischen den Führungsstellen und der Auflagestelle einstellbar ist. Dank der derart geschaffenen Höhenverstellung können Beutel mit unterschiedlicher Höhe in die Halterung eingesetzt werden.

Um den Anforderungen der Benutzer betreffend der Reinigung und Korrosionsbeständigkeit zu genügen, wird der Wägegutträger vorzugsweise aus einem Metall wie rostfreiem Edelstahl, einem Edelmetall, Titan, Aluminium, aus mit diesen Metallen beschichteten Materialien oder aus einer Kombination dieser Materialien gefertigt.

Ein weiterer Aspekt der Erfindung betrifft ein Verfahren zur Herstellung eines erfindungsgemässen einstückigen Wägegutträgers mit mindestens einer Auflagestelle, mit mindestens zwei Führungsstellen und mit mindestens einer Verbindungsstelle zur Verbindung des Wägegutträgers mit einem Lastaufnehmer. Der Herstellungsprozess umfasst zunächst die Erzeugung eines flachen Rohlings aus einem Metallblech, aus welchem anschliessend durch geeignetes Biegen ein dreidimensionaler Wägegutträger geformt wird.

Alternativ dazu kann auch nur die Halterung des Wägegutträgers einstückig ausgebildet sein, wobei diese zur Verbindung mit der Trägerstruktur geeignet ausgestaltet sein muss.

Diese Art der Herstellung ist sehr viel kostengünstiger als die Herstellung bekannter mehrteiliger Waagschalen und ermöglicht sogar die Massenproduktion der Wägegutträger oder der Halterungen. Ferner können die weiter oben erwähnten Nachteile mehrteiliger Wägegutträger durch die einstückige Ausbildung eliminiert werden. Je nach verwendetem Material kann es notwendig sein, weitere Bearbeitungsschritte, wie beispielsweise beschichten, schleifen oder polieren durchzuführen.

Der Rohling wird vorzugsweise durch Laserschneiden, Stanzen oder Wasserstrahlschneiden erzeugt, wodurch sowohl individuelle Wägegutträger als auch Serien von Wägegutträgern gefertigt werden können.

Einer oder mehrere erfindungsgemässe Wägegutträger können in einer Vielzahl von mit einer gravimetrischen Messvorrichtung versehenen Laborgeräten verwendet werden. So zum Beispiel in einer Waage, in einer, eine Wägezelle enthaltenden Dosiervorrichtung, in einem Wägelift oder einer Beschickungsvorrichtung für eine automatisierte Waage oder in einer, eine Wägezelle enthaltenden, automatisierten Vorrichtung zur Herstellung von Substanzformulierungen oder in einem automatisierten Substanzmanagementsystem.

Der erfindungsgemässe Wägegutträger und dessen Verwendung in einer Dosiervorrichtung werden anhand der folgenden Figuren näher beschrieben, wobei gleiche Elemente mit denselben Bezugszeichen versehen sind. Es zeigen:
- Figur 1: eine dreidimensionale Darstellung eines erfindungsgemässen Wägegutträgers in einer ersten Ausführung, in welchen ein Beutel eingesetzt ist und welcher mit einem Lastaufnehmer einer Wägezelle verbunden ist;
- Figur 2: eine dreidimensionale Darstellung eines Wägegutträgers in einer zweiten Ausführung, wobei der Wägegutträger voneinander trennbar, in eine Halterung für den Beutel und in eine, mit dem Lastaufnehmer einer Waage verbindbare Trägerstruktur unterteilt ist;

- Figur 3: eine dreidimensionale, schematische Darstellung eines Laborgerätes mit einer Waage, mit einer, oberhalb der Waage angeordneten Dosiervorrichtung und mit einem Wägegutträger in einer dritten Ausführung, wobei die Halterung für den Beutel derjenigen in der Figur 2 entspricht und die Trägerstruktur an den Lastaufnehmer der dargestellten Waage angepasst ist;
- Figur 4: eine dreidimensionale Darstellung einer Halterung eines erfindungsgemässen Wägegutträgers in einer vierten Ausführung, wobei die Halterung mit den in Figur 2 und 3 dargestellten Trägerstrukturen verbindbar ist, der Abstand ihrer Führungsstellen einstellbar ist und eine, auf die Bodennaht eines Beutels optimierte Auflagestelle aufweist;
- Figur 5: eine dreidimensionale Darstellung einer, aus einem Metallblech einstückig gefertigten Halterung eines Wägegutträgers in einer fünften Ausführung, wobei die Halterung mit den in Figur 2 und 3 dargestellten Trägerstrukturen verbindbar ist;
- Figur 6: eine dreidimensionale Darstellung eines, aus einem Metallblech einstückig gefertigten Wägegutträgers in einer sechsten Ausführung, wobei der Wägegutträger mit dem Lastaufnehmer einer Waage verbindbar ist.

Alle nachfolgenden Erläuterungen zu den einzelnen Teilen betreffend ihre Lage zueinander beziehen sich immer auf die Betriebsstellung der Wägegutträger.

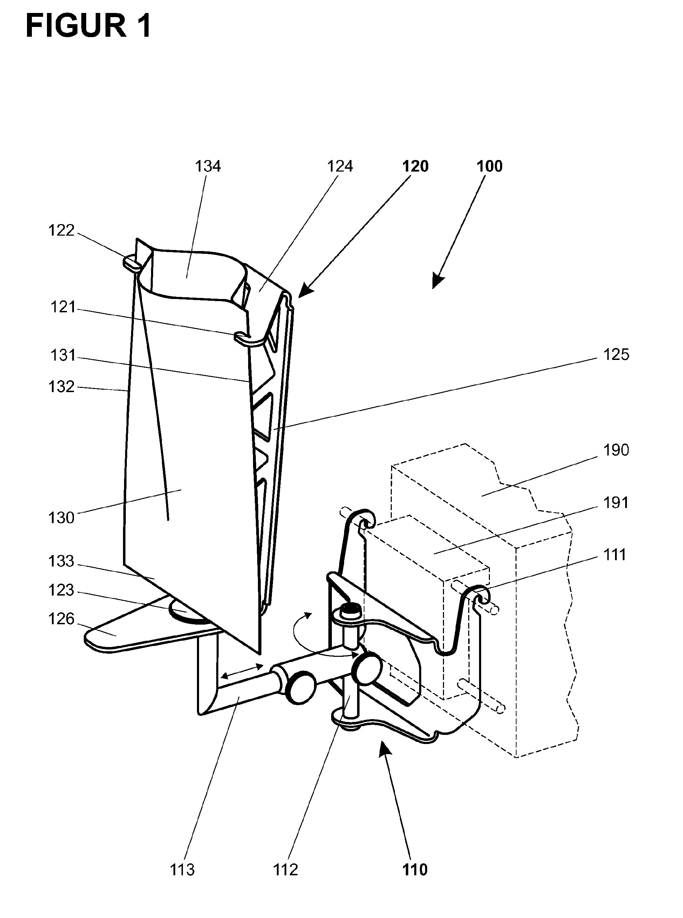

n Figur 1 ist eine erste Ausführung eines erfindungsgemässen Wägegutträgers 100 in dreidimensionaler Darstellung gezeigt. Der Wägegutträger 100 ist mit einem, mit unterbrochenen Linien schematisch dargestellten Lastaufnehmer 191 einer Wägezelle 190 lösbar verbunden. Der Wägegutträger 100 weist im Wesentlichen zwei miteinander fest verbundene Hauptbereiche auf, erstens eine Trägerstruktur 110 und zweitens eine Halterung 120. Die Verbindung zum Lastaufnehmer 191 erfolgt über eine, an einem ersten Ende der Trägerstruktur 110 ausgebildete Kuppelstelle 111. Am zweiten Ende der Trägerstruktur 110 ist die Halterung 120 angeordnet. Wie in Figur 1 dargestellt, kann die Trägerstruktur eine fixierbare Gelenkstelle 112 und ein teleskopisch verschiebbares und fixierbares Teleskopglied 113 aufweisen. Dadurch kann ausgehend von der Kuppelstelle 111 und im Rahmen der Einstellmöglichkeiten der Gelenkstelle 112 und des Teleskopgliedes 113, eine beliebige Position der Halterung 120 im umgebenden Raum eingestellt werden.

Die Halterung 120 weist eine Auflagestelle 123 sowie eine erste Führungsstelle 121 und eine zweite Führungsstelle 122 auf, die in der Betriebsstellung des Wägegutträgers 100 oberhalb der Auflagestelle 123 angeordnet sind. Die beiden Führungsstellen 121, 122 sind zwei an einem Joch 124 ausgebildete, sich parallel zueinander erstreckende Aufnahmenuten. Diese Aufnahmenuten durchbrechen das in der Betriebsstellung des Wägegutträgers 100 im Wesentlichen horizontal angeordnete Joch 124 im Wesentlichen in vertikaler Richtung. Die offene Seite der Aufnahmenut der ersten Führungsstelle 121 ist wie dargestellt, gegen die offene Seite der Aufnahmenut der zweiten Führungsstelle 122 gerichtet. Das Joch 124 wird von einem gitterförmig ausgebildeten, mit der Auflagestelle 123 verbundenen Ständer 125 getragen.

Wie in der Figur 1 dargestellt, kann ein eigensteifer Beutel 130 in die Halterung 120 eingesetzt werden. Dabei wird dessen erste Seitenkante 131 des Beutels 130 in die erste Führungsstelle 121 eingelegt und dessen, zur ersten Seitenkante 131 parallele zweite Seitenkante 132 in die zweite Führungsstelle 122 eingelegt. Ferner liegt die Bodenkante 133 des Beutels 130 auf der Auflagestelle 123 auf. Da die Distanz zwischen den Führungsstellen 121, 122 geringer ist als der Abstand der Seitenkanten 131, 132 zueinander, wird beim Einfügen des Beutels 130 in die Halterung 120 dessen vierte, nicht verschweisste Seitenkante eine Einfüllöffnung 134 bildend, gestaucht. Durch die Stauchung des eigensteifen Beutels 130 wird die Knicksteifigkeit desselben in seiner Längsrichtung erhöht, wodurch eine Substanz in den Beutel 130 eindosiert werden kann, ohne dass dieser während des Füllvorganges einknickt.

Im Bereich der Auflagestelle 123 ist ferner ein Haltegriff 126 angeordnet, welcher das Verbinden beziehungsweise das Entfernen des Wägegutträgers 100 vom Lastaufnehmer 191 erleichtert.

Selbstverständlich können an Stelle des Jochs 124 und an Stelle des Ständers 125 auch zwei U-förmige Profilschienen mit der Auflagestelle 123 verbunden sein und als Führungsstellen 121, 122 dienen. Deren Abstand zueinander müsste logischerweise im Bereich der Auflagestelle 123 der Länge der Bodenkante 133 des Beutels 130 abzüglich der Nuttiefen der Profilschienen entsprechen, während der Abstand im Bereich der Einfüllöffnung 134 vom gewünschten Öffnungsgrad derselben abhängt. Dies gilt selbstverständlich nur für Beutel 130, deren Seitenkanten 131, 132 in flachgedrücktem Zustand parallel zueinander verlaufen. Für gleichschenklige, trapezförmig ausgebildete Beutel könnten die Profilschienen auch parallel zueinander angeordnet sein. Die Profilschienen würden dem Beutel 130 noch zusätzliche Steifigkeit verleihen, da die Seitenkanten 131, 132 über ihre gesamte Länge in deren Aufnahmenuten eingefasst wären. Grundsätzlich ist aber das Einlegen des Beutels 130 in eine solcherart ausgestaltete Halterung schwieriger als in eine Halterung 120 gemäss der Figur 1 mit nur kurzen Führungsstellen 121, 122.

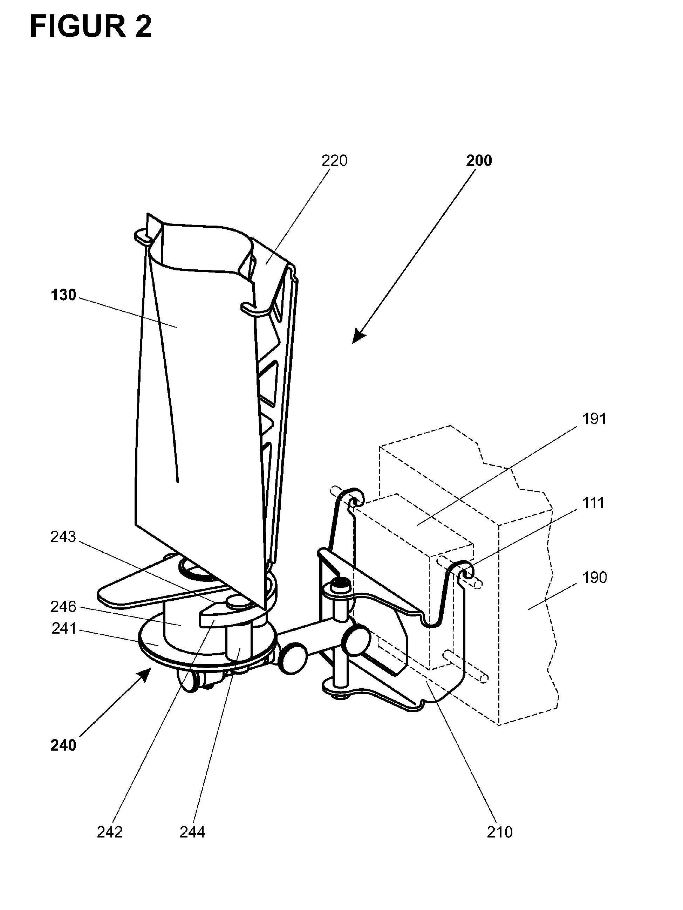

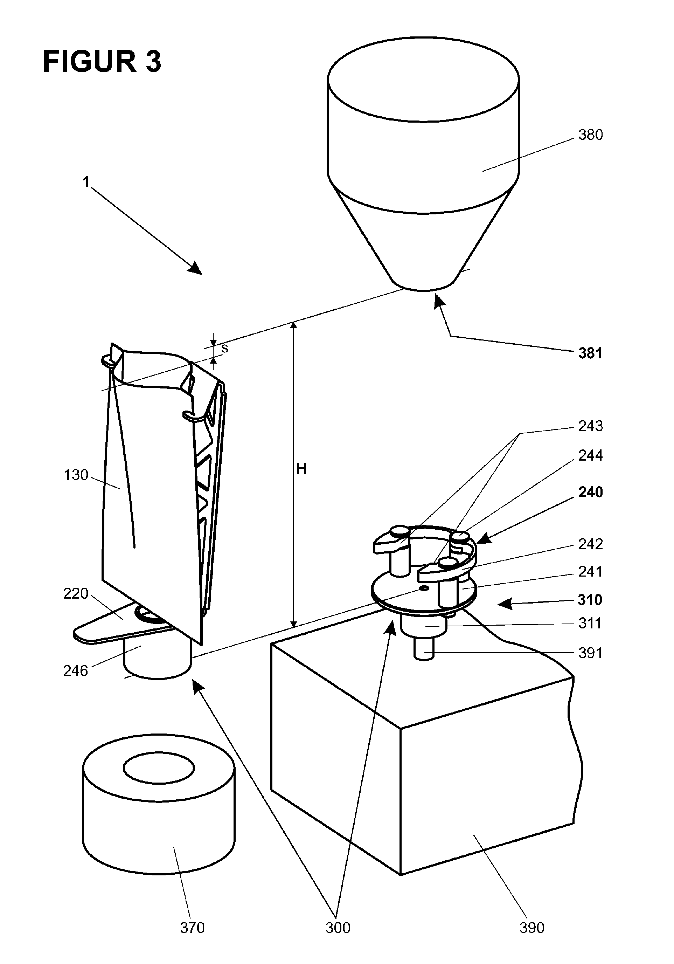

Figur 2 zeigt eine dreidimensionale Darstellung eines Wägegutträgers 200 in einer zweiten Ausführung, welcher nahezu identisch ausgestaltet ist wie der in Figur 1 gezeigte Wägegutträger 100. Aus diesem Grund sind identische Merkmale in beiden Figuren mit denselben Bezugszeichen versehen. Anders als in Figur 1 sind die Hauptbereiche des Wägegutträgers 200 in Figur 2 auch physisch in eine Trägerstruktur 210 und eine Halterung 220 unterteilt und somit voneinander trennbar beziehungsweise miteinander verbindbar. Zu diesem Zwecke beinhaltet der Wägegutträger 200 ein Verbindungsglied 240. Das Verbindungsglied 240 weist eine Plattform 241, drei Zentrierstützen 244 und ein Federelement 242 mit zwei Rückhaltenasen 243 auf, die alle mit der Trägerstruktur 210 fest verbunden sind. Es ist anzumerken, dass in Figur 2 nur eine Rückhaltenase 243 und eine Zentrierstütze 242 vollständig sichtbar sind. Das Verbindungsglied 240 weist ferner einen zylinderförmigen Fuss 246 auf, welcher mit der Halterung 220 fest verbindbar ist. Die Funktionsweise des Verbindungsgliedes 240 wird in den Ausführungen zur Figur 3 ausführlicher beschrieben.

Auch die Trägerstruktur 210 weist an seinem ersten Ende eine geeignete Kuppelstelle 111 zur lösbaren Verbindung mit dem Lastaufnehmer 191 einer Wägezelle 190 auf. Am Zweiten Ende ist die Plattform 241 angeordnet, welche dem Fuss 246 eine sichere Auflage bietet. Die drei Zentrierstützen 244 erstrecken sich von der Plattform 241 ausgehend nach oben. An deren Enden ist das Federelement 243 gelagert. Die vorliegende Ausgestaltung mit einem Verbindungsglied 240 hat den Vorteil, dass die Trägerstruktur 210 während einer Serie von Wägungen am Lastaufnehmer 191 verbleiben kann, während die Halterung 220 mit den befüllten oder noch zu befüllenden Beuteln 130 nacheinander ausgewechselt werden können. Die Einstellungen der Trägerstruktur 210 bleiben auf diese Weise während der ganzen Serie von Wägungen gleich.

Figur 3 zeigt eine dreidimensionale, schematische Darstellung eines Laborgerätes 1 mit einem Wägegutträger 300 in einer dritten Ausführung. Dieser Wägegutträger 300 unterscheidet sich vom Wägegutträger 200 in der Figur 2 lediglich dadurch, dass dessen Trägerstruktur 310 an den Lastaufnehmer 391 einer Waage 390 angepasst ist, die sich von der in den Figuren 1 und 2 dargestellten Waage unterscheidet. Die Halterung 220 ist identisch mit derjenigen aus der Figur 2.

Die in Figur 3 dargestellte Trägerstruktur 310 weist eine ringförmige Kuppelstelle 311 auf, welche eine nicht dargestellte Bohrung aufweist und welche auf den Lastaufnehmer 391 aufgesteckt werden kann. Ferner weist die Trägerstruktur 310 die bereits weiter oben beschriebenen, in Figur 2 dargestellten Teile des Verbindungsgliedes 240 auf.

Genau oberhalb der Trägerstruktur 310 ist eine Dosiervorrichtung 380 angeordnet, deren Austragungsöffnung 381 im Abstand H von der Plattform 241 der Trägerstruktur 310 beabstandet ist. Dieser Abstand H entspricht im Wesentlichen der Gesamthöhe einer Halterung 220 mit eingesetztem Beutel 130, inklusive eines kleinen Spiels S, so dass die Halterung 220 mit Beutel 130 mittels einer horizontalen Bewegung auf die Plattform 241 geschoben und damit mit der Trägerstruktur 310 verbunden werden kann.

Beim Verbinden der Halterung 220 mit der Trägerstruktur 310 gelangen die drei Zentrierstützen 244 mit dem Fuss 246 in Anlage, wodurch die mit der Trägerstruktur 310 verbundene Halterung 220 zum Lastaufnehmer 391 präzise ausgerichtet wird. Das Federelement 242, welches in einer horizontalen Ebene C-förmig ausgebildet ist, wird durch die Aussenkontur des Fusses 246 leicht aufgespreizt, wobei durch die beiden Rückhaltenasen 243 der Fuss 246 gegen die drei Zentrierstützen 244 gepresst und somit eine sichere Verbindung der Halterung 220 mit der Trägerstruktur 310 erreicht wird.

Halterungen 220, welche nicht mit der Trägerstruktur 310 verbunden sind, können in einer, hier schematisch dargestellten Haltevorrichtung 370 ausserhalb des Laborgerätes 1 gelagert werden. Ferner können in der Haltevorrichtung 370 steckende Halterungen 220 mit Beuteln 130 bestückt werden, beziehungsweise die Beutel 130 können daraus entfernt werden.

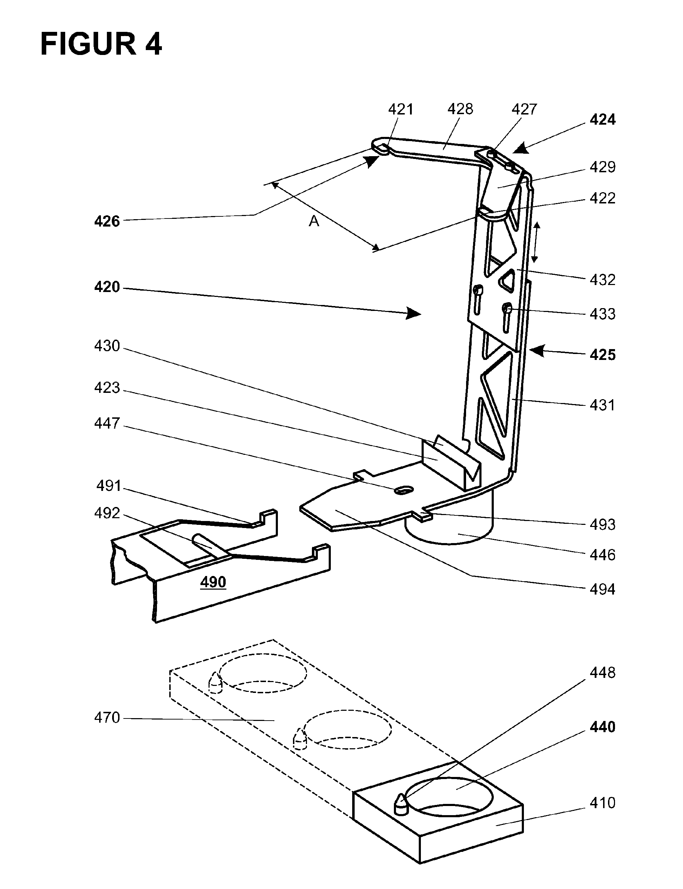

Die Figur 4 zeigt eine dreidimensionale Darstellung einer Halterung 420 eines erfindungsgemässen Wägegutträgers in einer vierten Ausführung, wobei die Halterung 420 mit den in den Figuren 2 und 3 dargestellten Trägerstrukturen 210, 310 verbindbar ist. Wie die weiter oben beschriebenen Halterungen, weist auch die in Figur 4 dargestellte Halterung 420 einen Ständer 425 und ein Joch 424 auf. Der Ständer 425 ist jedoch in ein Ständerunterteil 431 und in ein dazu in vertikaler Richtung verschiebbares Ständeroberteil 432 zweigeteilt und durch Feststellmittel 433 miteinander starr verbindbar. Dank der derart geschaffenen Höhenverstellung, können Beutel mit unterschiedlicher Höhe in die Halterung 420 eingesetzt werden.

Auch das Joch 424 ist in ein, mit dem Ständeroberteil 432 starr verbundenes erstes Jochteil 428 und ein dazu verschiebbares zweites Jochteil 429 zweigeteilt. Die erste Führungsstelle 421 ist am ersten Jochteil 428 ausgebildet und die zweite Führungsstelle 422 ist am zweiten Jochteil 429 ausgebildet. Das zweite Jochteil 429 kann mit Feststellmitteln 427 am ersten Jochteil 428 festgelegt werden, so dass der Abstand A zwischen den Führungsstellen 421, 422 einstellbar ist. Aus der Figur 4 und der vorangehenden Beschreibung geht hervor, dass eine derartige Einstellung des Abstandes A in den meisten Fällen eine asymmetrische Anordnung des Beutels 420 auf der Auflagestelle 423 verursacht. Um dies zu vermeiden, können selbstverständlich auch beide Jochteile 428, 429 zur Stütze 425 verschiebbar ausgebildet sein.

Damit ein nicht dargestellter Beutel problemlos in die Führungsstellen 421, 422 eingesetzt werden kann, weisen diese je eine geeignete Einlaufkontur 426 auf. Die Einlaufkontur 426 in Figur 4 ist ein einfacher Radius, mittels welchem die offene Seite der Aufnahmenut der Führungsstellen 421, 422 erweitert wird.

Damit die die Bodenkante eines Beutels nicht seitlich wegrutschen kann, beinhaltet die in Figur 4 dargestellte Halterung 420 eine optimierte Auflagestelle 423. Diese weist eine V-förmig ausgebildete Kehlnut 430 auf, welche entsprechend der Bodenkante des einzulegenden Beutels ausgerichtet ist. In unmittelbarer Nähe des Fusses 446 ist ferner an der Halterung 420 ein Ausrichtungsmittel 447 ausgebildet. Selbstverständlich muss dieses Ausrichtungsmittel 447 nicht das dargestellte Langloch sein, es sind auch andere Mittel wie beispielsweise angefräste Flächen, Vorsprünge, Nuten, Stifte sowie mehreckig ausgebildete Füsse 446 und dergleichen geeignet, um ein Ausrichtungsmittel 447 zu schaffen. Das Ausrichtungsmittel 447 dient dazu, die Halterung 420 auch in Bezug auf ihre Mittellängsachse eindeutig in einer Trägerstruktur 410 zu positionieren. Entsprechend weist die sehr vereinfacht dargestellte Trägerstruktur 410 einen zur Verdrehsicherung 447 passend ausgebildeten Kegelbolzen 448 auf. Das in der Figur 4 dargestellte Verbindungsglied 440 ist eine in der Trägerstruktur 410 ausgebildete Bohrung, deren Durchmesser dem Durchmesser des Fusses 446 entspricht. Der Einsatz eines Ausrichtungsmittels 447 ist insbesondere dann wichtig, wenn die Trägerstruktur 410 eine, mit unterbrochener Linie ergänzend dargestellte Mehrfachaufnahme 470 für mehrere Halterungen 420 ist. Solche Mehrfachaufnahmen 470 können beispielsweise Racks von Lagersystemen und Aufbewahrungsboxen sein, aber auch Aufnahmen und Kassetten von Beschickungsvorrichtungen wie beispielsweise Autosampler, Wägelifte und Roboter.

Wie in der Figur 4 angedeutet, kann auch die Mehrfachaufnahme 470 mittels einer weiteren Beschickungsvorrichtung, beispielsweise einem Roboter, mit Halterungen 420 bestückt werden. Zu diesem Zwecke weist die Halterung 420 einen zungenförmig ausgebildeten Greiferanschluss 494 mit von dessen beiden Seiten abstehenden Nocken 493 auf. Die Nocken 493 können von einem gabelförmig ausgebildeten Greifer 490 eines nicht dargestellten Roboters untergriffen werden, so dass die Nocken 493 auf den Auflagern 491 des Greifers 490 aufliegen und der zungenförmige Greiferanschluss 494 durch den Quersteg 492 des Greifers 490 abgestützt wird. Ohne diesen Quersteg 492 würde die aufgenommene Halterung 420 sonst aus dem Greifer 490 kippen.

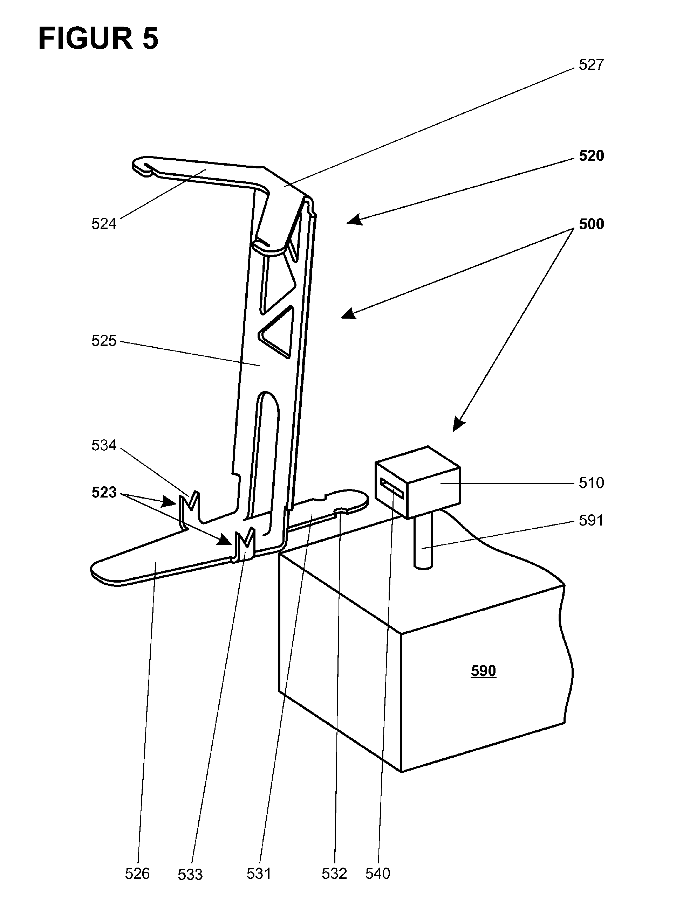

Figur 5 zeigt eine dreidimensionale Darstellung einer aus einem Metallblech einstückig gefertigten Halterung 520 eines Wägegutträgers 500 in einer fünften Ausführung. Die Halterung 520 wird so hergestellt, dass zuerst aus einem ebenen Metallblech ein Rohling 527 mittels Laserschneiden, Fräsen, Wasserstrahlschneiden oder Sägen herausgearbeitet wird. Anschliessend wird der Halterung 520 durch mehrere Abkantoperationen des Rohlings 527 die endgültige Form verliehen, wodurch das Joch 524, die Stütze 525 und der Haltegriff 526 in ihre endgültige Lage zueinander gebracht werden. Eine derart gefertigte Halterung 520 ist nicht nur kostengünstig herstellbar, sondern sie weist auch den unschätzbaren Vorteil auf, dass keine Ritzen und Spalten infolge zusammengefügter Teile vorhanden sind, in denen sich beispielsweise Reste von Substanzen ansammeln können. Einstückige Halterungen 520 sind dementsprechend vorzuziehen, wenn diese aufgrund ihres Einsatzgebietes mehrmals beispielsweise gereinigt und sterilisiert werden müssen.

Als Trägerstruktur 510 dient ein quaderförmiges Stück mit einem darin ausgebildeten, schlitzförmigen Verbindungsglied 540, welches einen nicht sichtbaren Einrastmechanismus aufweist. Die Trägerstruktur 510 ist mit einem Lastaufnehmer 591 einer Wägezelle 590 fest verbunden. Eine an der Halterung 520 ausgebildete, sich horizontal erstreckende Zunge 531 mit Einrastkerben 532 kann in das schlitzförmige Verbindungsglied 540 hineingesteckt werden. Dessen Einrastmechanismus greift bei vollständig eingesteckter Zunge 531 in deren Einrastkerben 532 ein. Am Haltegriff 526 sind ferner seitlich abstehende, nach oben abgebogene Ohren 533 angeordnet, welche mit ihren V-förmigen Einschnitten 534 die Auflagestelle 523 für einen Beutel bilden.

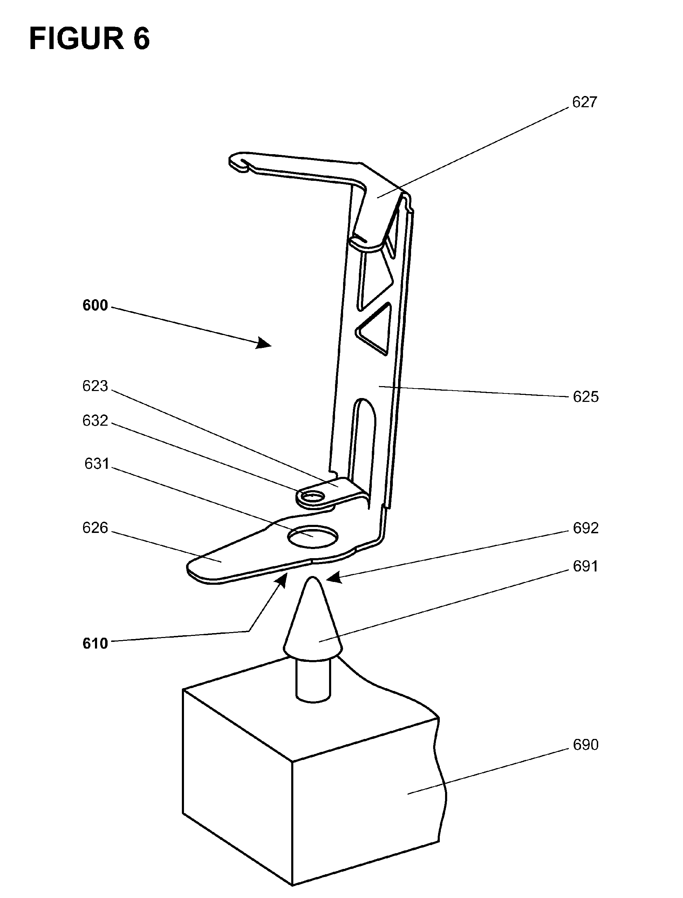

Figur 6 zeigt eine dreidimensionale Darstellung eines aus einem Metallblech einstückig gefertigten Wägegutträgers 600 in einer sechsten Ausführung. Dieser wird so hergestellt, dass zuerst aus einem ebenen Metallblech ein Rohling 627 mittels Laserschneiden, Fräsen, Wasserstrahlschneiden oder Sägen herausgearbeitet wird. Anschliessend wird dem Wägegutträger 600 durch mehrere Abkantoperationen des Rohlings 627 die endgültige Form verliehen.

Die integrierte Trägerstruktur 610 des Wägegutträgers 600 ist äusserst einfach ausgestaltet. Eine erste Bohrung 631 ist im sich horizontal erstreckenden Haltegriff 626 ausgebildet. Die Auflagestelle 623 wird durch eine, sich parallel zum Haltegriff 626 erstreckende Lasche gebildet, welche aus dem, sich vom Haltegriff 626 im Wesentlichen vertikal nach oben erstreckenden Ständer 625 heraus gebogen ist. In der Auflagestelle 623 ist eine zweite Bohrung 632 ausgebildet, welche genau senkrecht über der ersten Bohrung 631 angeordnet ist und im Vergleich zu dieser einen kleineren Durchmesser aufweist. Entsprechend ausgestattet kann der Wägegutträger 600 auf einen kegelförmigen Lastaufnehmer 691 einer Wägezelle 690 aufgesetzt werden. Wenn der Wägegutträger 600 mit dem Lastaufnehmer 691 verbunden ist, dient die durch die zweite Bohrung 632 hindurchreichende Spitze 692 des Lastaufnehmers 691 als Anschlag für die Bodenkante eines nicht dargestellten Beutels, welche auf der Auflagestelle 632 zwischen dem Ständer 625 und der Spitze 692 aufliegt.

Ein derart gefertigter Wägegutträger 600 weist logischerweise dieselben Vorteile auf, wie die in der Figur 5 dargestellte Halterung 520.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Unter anderem sind Ausführungsformen des Erfindungsgedankens denkbar, bei welchen beispielsweise die Trägerstruktur als Mehrfachaufnahme ausgestaltet, mit einem Lastaufnehmer verbindbar ist.

Bezugszeichenliste
- 1: Laborgerät
- 600, 500, 300, 200, 100: Wägegutträger
- 610, 510, 410, 310, 210, 110: Trägerstruktur
- 311, 111: Kuppelstelle
- 112: Gelenkstelle
- 113: Teleskopglied
- 520, 420, 220, 120: Halterung
- 421, 121: erste Führungsstelle
- 422, 122: zweite Führungsstelle
- 623, 523, 423, 123: Auflagestelle
- 524, 424, 124: Joch
- 625, 525, 425, 125: Ständer
- 626, 526, 126: Haltegriff
- 130: Beutel
- 131: erste Seitenkante
- 132: zweite Seitenkante
- 133: Bodenkante
- 134: Einfüllöffnung
- 690, 590, 390, 190: Wägezelle
- 691, 591, 391, 191: Lastaufnehmer
- 540, 440, 240: Verbindungsglied
- 241: Plattform
- 242: Federelement
- 243: Rückhaltenase
- 244: Zentrierstützen
- 446,246: Fuss
- 370: Haltevorrichtung
- 380: Dosiervorrichtung
- 381: Austragungsöffnung
- 426: Einlaufkontur
- 427: Feststellmittel

- 428: erstes Jochteil
- 429: zweites Jochteil
- 430: Kehlnut
- 431: Ständerunterteil
- 432: Ständeroberteil
- 433: Feststellmittel
- 447: Ausrichtungsmittel
- 448: Kegelbolzen
- 470: Mehrfachaufnahme
- 490: Greifer
- 491: Auflager
- 492: Quersteg
- 493: Nocken
- 494: Greiferanschluss
- 627,527: Rohling
- 531: Zunge
- 532: Einrastkerbe
- 533: Ohr
- 534: Einschnitt
- 631: erste Bohrung
- 632: zweite Bohrung
- 692: Spitze
- A: Abstand
- H: Höhe
- S: Spiel

## Patentansprüche

1. Wägegutträger (100, 200, 300, 500, 600) für eine Wägezelle (190, 390, 590, 690), welcher Wägegutträger (100, 200, 300, 500, 600) mit einem Lastaufnehmer (191, 391, 591, 691) der Wägezelle (190, 390, 590, 690) verbindbar ist, **dadurch gekennzeichnet,**
• **dass** der Wägegutträger (100, 200, 300, 500, 600) mindestens eine Auflagestelle (123, 423, 523, 623) und mindestens zwei Führungsstellen (121, 122, 421, 422) zur Aufnahme eines Beutels (130) beinhaltet, welcher Beutel (130) in unbefülltem Zustand flach ausgebildet ist und zwei Seitenkanten (131, 132) aufweist, sowie mit einer Einfüllöffnung (134) versehen ist und aus einem eigensteifen Folienmaterial gefertigt ist,
• **dass** die mindestens zwei Führungsstellen (121, 122, 421, 422) bezogen auf die Lastrichtung oberhalb der mindestens einen Auflagestelle (123, 423, 523, 623) angeordnet sind, wobei bei einem in den Wägegutträger (100, 200, 300, 500, 600) aufgenommenen Beutel (130) die Auflagestelle (123, 423, 523, 623) der Abstützung des Beutels (130) in Lastrichtung dient und die Führungsstellen (121, 122, 421, 422) zur Führung und Ausrichtung des Beutels (130) in Lastrichtung dienen,
• **dass** jede der beiden Seitenkanten (131, 132) eines aufgenommenen Beutels (130) durch mindestens eine Führungsstelle (121, 122, 421, 422) geführt ist und
• **dass** zur Erhöhung der Knicksteifigkeit des Beutels (130) in seiner Längsrichtung und zum Öffnen der Einfüllöffnung (134) der Abstand (A) zwischen den Führungsstellen (121, 122, 421, 422) kleiner ist als die Distanz der Seitenkanten (131, 132) eines flachgedrückten Beutels (130).

2. Wägegutträger (100, 200, 300, 500, 600) nach Anspruch 1, **dadurch gekennzeichnet, dass** der Wägegutträger (100, 200, 300, 500, 600) eine Trägerstruktur (110, 210, 310, 410, 510, 610) und eine Halterung (120, 220, 420, 520) aufweist, wobei die Trägerstruktur (110, 210, 310, 410, 510, 610) eine Kuppelstelle (111, 311) zum Koppeln der Trägerstruktur (110, 210, 310, 410, 510, 610) mit dem Lastaufnehmer (191, 391, 591, 691) sowie ein Verbindungsglied (240, 440, 540) zur lösbaren Verbindung mit der Halterung (120, 220, 420, 520) beinhaltet und die Halterung (120, 220, 420, 520) die Auflagestelle (123, 423, 523, 623) und die Führungsstellen (121, 122, 421, 422) aufweist.

3. Wägegutträger (100, 200, 300, 500, 600) nach Anspruch 1 oder 2, **dadurch gekennzeichnet, dass** die mindestens zwei Führungsstellen (121, 122, 421, 422) in derselben, orthogonal zur Lastrichtung sich erstreckenden Ebene angeordnet sind.

4. Wägegutträger (100, 200, 300, 500, 600) nach einem der Ansprüche 1 bis 3, **dadurch gekennzeichnet, dass** jede Führungsstelle (121, 122, 421, 422) eine in Lastrichtung sich erstreckende Aufnahmenut zur Aufnahme einer Seitenkante (131, 132) aufweist.

5. Wägegutträger (100, 200, 300, 500, 600) nach Anspruch 4, **dadurch gekennzeichnet, dass** die offenen Seiten der Aufnahmenut mindestens zweier Führungsstellen (121, 122, 421, 422) gegeneinander gerichtet sind.

6. Wägegutträger (100, 200, 300, 500, 600) nach Anspruch 4 oder 5, **dadurch gekennzeichnet, dass** die offene Seite der Aufnahmenut eine Einlaufkontur (426) aufweist.

7. Wägegutträger (100, 200, 300, 500, 600) nach einem der Ansprüche 1 bis 6, **dadurch gekennzeichnet, dass** der Wägegutträger (100, 200, 300, 500, 600) oder mindestens dessen Halterung (120, 220, 420, 520) einen, zum Auflegen beziehungsweise Entfernen dienenden Haltegriff (126, 526, 626) und/oder Greiferanschluss (494) aufweist.

8. Wägegutträger (100, 200, 300, 500, 600) nach einem der Ansprüche 1 bis 7, **dadurch gekennzeichnet, dass** der Wägegutträger (100, 200, 300, 500, 600) oder mindestens dessen Halterung (120, 220, 420, 520) in eine Mehrfachaufnahme (470) einsetzbar ist und mindestens ein Ausrichtungsmittel (447) zur Ausrichtung der Halterung (120, 220, 420, 520) zu dieser Mehrfachaufnahme (470) vorhanden ist.

9. Wägegutträger (100, 200, 300, 500, 600) nach einem der Ansprüche 1 bis 8, **dadurch gekennzeichnet, dass** der Wägegutträger (100, 200, 300, 500, 600) ein Metall wie einen rostfreien Edelstahl, ein Edelmetall, Titan, Aluminium, mit diesen Metallen beschichtete Materialien oder eine Kombination dieser Materialien aufweist.

10. Wägegutträger (100, 200, 300, 500, 600) nach einem der Ansprüche 1 bis 9, **dadurch gekennzeichnet, dass** der Wägegutträger (100, 200, 300, 500, 600) oder die Halterung (120, 220, 420, 520) einstückig aus einem Metallblech gefertigt ist.

11. Wägegutträger (100, 200, 300, 500, 600) nach einem der Ansprüche 1 bis 9, **dadurch gekennzeichnet, dass** die Höhe (H) zwischen den Führungsstellen (121, 122, 421, 422) und der Auflagestelle (123, 423, 523, 623) einstellbar ist.

12. Verfahren zur Herstellung eines einstückigen Wägegutträgers (100, 200, 300, 500, 600) nach einem der Ansprüche 1 bis 10, mit mindestens einer Auflagestelle (123, 423, 523, 623), mit mindestens zwei Führungsstellen (121, 122, 421, 422) und mit mindestens einer Verbindungsstelle zur Verbindung des Wägegutträgers (100, 200, 300, 500, 600) mit einem Lastaufnehmer (191, 391, 591, 691), **dadurch gekennzeichnet, dass** aus einem Metallblech ein flacher Rohling (527, 627) erzeugt wird und aus diesem durch anschliessendes Biegen ein dreidimensionaler Wägegutträger (100, 200, 300, 500, 600) geformt wird.

13. Verfahren zur Herstellung einer einstückigen Halterung (120, 220, 420, 520) nach einem der Ansprüche 2 bis 10, mit mindestens einer Auflagestelle (123, 423, 523, 623), mit mindestens zwei Führungsstellen (121, 122, 421, 422) und mit mindestens einer Verbindungsstelle zur Verbindung der Halterung (120, 220, 420, 520) mit einer Trägerstruktur (110, 210, 310, 410, 510, 610), **dadurch gekennzeichnet, dass** aus einem Metallblech ein flacher Rohling (527, 627) erzeugt wird und aus diesem durch anschliessendes Biegen ein dreidimensionaler Wägegutträger (100, 200, 300, 500, 600) geformt wird.

14. Verfahren nach Anspruche 12 oder 13, **dadurch gekennzeichnet, dass** der Rohling (527, 627) durch Laserschneiden, Stanzen oder Wasserschneiden erzeugt wird.

15. Laborgerät (1), insbesondere eine Waage, eine eine Wägezelle (190, 390, 590, 690) enthaltende Dosiervorrichtung (380), eine mit einem Wägelift, einer Beschickungsvorrichtung und/oder einem Autosampler automatisierte Waage oder eine, eine Wägezelle (190, 390, 590, 690) enthaltende Vorrichtung zur Herstellung von Substanzformulierungen, **dadurch gekennzeichnet, dass** dieses mindestens einen Wägegutträger (100, 200, 300, 500, 600) nach einem der Ansprüche 1 bis 11 aufweist.
